# EUROPEAN PATENT APPLICATION

(11) **EP 4 553 555 A1**
(43) Date of publication of application: **14.05.2025**
(21) Application number: 24211868.5
(22) Date of filing: 08.11.2024
(51) Int. Cl.: G02B 6/44

(54) **CABLE MANIFOLD ASSEMBLY AND FIBER OPTIC CLOSURE**

(30) Priority: 10.11.2023 US 202318506624
(71) Applicant: AFL Telecommunications LLC, Duncan, SC 29334 (US)
(72) Inventor: Davidson, Aran James Russell, Duncan, SC 29334 (US)
(74) Representative: Serjeants LLP

(57) **Abstract**

A cable manifold assembly (100) and a telecommunications closure are provided. The cable manifold assembly (100) includes a body (110) having a side wall (112) and a base wall (114), the side wall (112) and base wall (114) forming an interior volume. The base wall (112) forms an insert opening (148). The body (110) forms a pathway (134) extending from the insert opening (146). An insert (136) including a member (140) is extendable into the insert opening (148) and pathway (134) at the body (110). The insert (136) forms a channel at the member (140). The channel diverges from a closed end proximate to the insert opening (148) to an open end distal to the closed end. The channel is configured to receive a cable at the channel from the open end. A cover (200) is configured to selectively attach to the body (110) to obscure the open end.

## Description

### FIELD

The present disclosure relates generally to closures and cable management apparatuses for telecommunications equipment, such as fiber optic systems.

### BACKGROUND

Within Fiber-To-The-Home (FTTH) Networks, operators typically build in various junctions points or demarcation points to distribute an optical fiber network to multiple dwellings. Demarcation points can typically be housed inside a protective cabinet, a dome enclosure, a pedestal enclosure, or wall box, situated at the side of the road. Inside the cabinet is an assembly of managed optical fiber connection points that provide housing for optical fiber splicing, optical splitters, optical fiber connections, and cable/duct management. The use of these demarcation points allows operators to connect users to the optical fiber network.

An apparatus that facilitates routing fiber/cable inside a protective cabinet, dome enclosure, pedestal enclosure, or wall box would be beneficial and advantageous. Additionally, or alternatively, an apparatus providing protection would be beneficial and advantageous.

### BRIEF DESCRIPTION

Aspects and advantages of the invention in accordance with the present disclosure will be set forth in part in the following description, or may be learned through practice of the technology.

An aspect of the present disclosure is directed to a cable manifold assembly. The cable manifold assembly includes a body having a side wall and a base wall, the side wall and base wall forming an interior volume, the base wall forming an insert opening, and the body forming a pathway extending from the insert opening. An insert including a member is extendable into the insert opening and pathway at the body. The insert forms a channel at the member. The channel diverges from a closed end proximate to the insert opening to an open end distal to the closed end. The channel is configured to receive a cable at the channel from the open end. A cover is configured to selectively attach to the body to obscure the open end.

The insert may comprise a pair of members separated from one another by a base. The pair of members may be extendable into respective pathways at the body.

The body may comprise a displaceable wall extending between the respective pathways for the pair of members of the insert. The displaceable wall may form at least a portion of the pathway.

The body may form a cavity, channel or opening between the respective pathways for the pair of members of the insert. The cover may comprise a protrusion extendable into the cavity, channel or opening. The protrusion may be configured to contact the displaceable wall at the cavity, channel or opening to displace the displaceable wall to narrow the pathway.

The cover may comprise a cover wall configured to obscure the open end. The protrusion may extend from the cover wall.

The protrusion may partially extend into the cavity, channel or opening to form a cable pass through the cavity, channel or opening.

The insert may form a U-shape comprising a pair of members extending from a base. The insert may be extendable into the insert opening substantially perpendicular to an extension of a cable into the interior volume. The pathway may extend from the insert opening substantially perpendicular to an extension of the cable into the interior volume.

The side wall of the body may form a latch receiver opening configured to receive a latch of the cover.

The side wall and a displaceable wall may form at least one pathway. A latch receiver opening may be formed at the side wall to receive a latch extending from a cover wall of the cover.

The body may comprise a pair of displaceable walls extending from the insert opening. The pair of displaceable walls may converge toward one another from proximate to the closed end toward the open end.

The pathway may provide an opening into the interior volume of the body through which the cable is extendable. An extension of the cable may be substantially perpendicular to an extension of the pathway from the insert opening.

The displaceable wall may diverge from the side wall at the open end of the pathway.

Another aspect of the present disclosure is directed to a telecommunications closure. The closure includes a fiber raceway configured to route to a telecommunications module. A cable manifold assembly includes a body having a side wall and a base wall, the side wall and base wall forming an interior volume. The side wall and a displaceable wall form a pathway extending substantially perpendicular to a direction of extension of a cable into the interior volume. The pathway forms an opening into the interior volume. An insert having a member is extendable into the pathway at the body. The insert forms a channel at the member. The channel diverges from a closed end to an open end distal to the closed end. The channel is configured to receive the cable at the channel from the open end. A cover is configured to selectively attach to the body to obscure the open end.

The cable manifold assembly of the telecommunications closure may comprise a fiber management tab extending from the side wall within the interior volume. A channel may be formed extending to the opening. A pair of side walls may form the channel extending toward the fiber raceway.

These and other features, aspects, and advantages of the present invention will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
Fig. 1 provides an exemplary embodiment of a telecommunications closure including an embodiment of a cable manifold assembly in accordance with aspects of the present disclosure;
Fig. 2 depicts an embodiment of a body of an embodiment of the cable manifold assembly in accordance with aspects of the present disclosure;
Fig. 3A depicts an embodiment of an insert and portion of the body of the cable manifold assembly of Fig. 2 in accordance with aspects of the present disclosure;
Fig. 3B depicts an embodiment of an insert and portion of the body of the cable manifold assembly of Fig. 2 in accordance with aspects of the present disclosure;
Fig. 4 depicts an embodiment of the body of the embodiment of the cable manifold assembly of Fig. 2 in accordance with aspects of the present disclosure;
Fig. 5 depicts an embodiment of a cover for the cable manifold assembly in accordance with aspects of the present disclosure;
Fig. 6 depicts an embodiment of the cover of Fig. 5 for the cable manifold assembly in accordance with aspects of the present disclosure;
Fig. 7 depicts an exemplary method for assembly of the cover and body of an embodiment of the cable manifold assembly in accordance with aspects of the present disclosure;
Fig. 8 depicts a detailed view of an embodiment of the cable manifold assembly in accordance with aspects of the present disclosure;
Fig. 9 depicts a bottom-up view of an exemplary embodiment of the cable manifold assembly in accordance with aspects of the present disclosure;
Fig. 10 depicts a cutaway view of an exemplary embodiment of the cable manifold assembly in accordance with aspects of the present disclosure;
Fig. 11 depicts an embodiment of a cable manifold assembly in accordance with aspects of the present disclosure;
Fig. 12 depicts a bottom-up view of an exemplary method for assembly of a cover and body of the embodiment of the cable manifold assembly of Fig. 11 in accordance with aspects of the present disclosure;
Fig. 13 provides an exemplary embodiment of a telecommunications closure including the embodiment of a cable manifold assembly of Fig. 11 in accordance with aspects of the present disclosure;
Fig. 14 provides an exemplary embodiment of a telecommunications closure including the embodiment of a cable manifold assembly of Fig. 11 in accordance with aspects of the present disclosure;
Fig. 15A depicts an exemplary embodiment of a cable manifold assembly in accordance with aspects of the present disclosure;
Fig. 15B depicts the exemplary embodiment of a cable manifold assembly of Fig. 15A, including cables extending thereat, in accordance with aspects of the present disclosure;
Fig. 16 provides an exemplary embodiment of a telecommunications closure including the embodiment of a cable manifold assembly of Figs. 15A-15B in accordance with aspects of the present disclosure; and
Fig. 17 provides an exemplary embodiment of a telecommunications closure including the embodiment of a cable manifold assembly of Figs. 15A-15B in accordance with aspects of the present disclosure.

Repeat use of reference characters in the present specification and drawings is intended to represent the same or analogous features or elements of the present invention.

### DETAILED DESCRIPTION

Reference now will be made in detail to embodiments of the present invention, one or more examples of which are illustrated in the drawings. The word "exemplary" is used herein to mean "serving as an example, instance, or illustration." Any implementation described herein as "exemplary" is not necessarily to be construed as preferred or advantageous over other implementations. Moreover, each example is provided by way of explanation, rather than limitation of, the technology. In fact, it will be apparent to those skilled in the art that modifications and variations can be made in the present technology without departing from the scope or spirit of the claimed technology. For instance, features illustrated or described as part of one embodiment can be used with another embodiment to yield a still further embodiment. Thus, it is intended that the present disclosure covers such modifications and variations as come within the scope of the appended claims and their equivalents. The detailed description uses numerical and letter designations to refer to features in the drawings. Like or similar designations in the drawings and description have been used to refer to like or similar parts of the invention.

As used herein, the terms "first", "second", and "third" may be used interchangeably to distinguish one component from another and are not intended to signify location or importance of the individual components. The singular forms "a," "an," and "the" include plural references unless the context clearly dictates otherwise. The terms "coupled," "fixed," "attached to," and the like refer to both direct coupling, fixing, or attaching, as well as indirect coupling, fixing, or attaching through one or more intermediate components or features, unless otherwise specified herein. As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive- or and not to an exclusive- or. For example, a condition A or B is satisfied by any one of the following: A is true (or present) and B is false (or not present), A is false (or not present) and B is true (or present), and both A and B are true (or present).

Ranges provided herein are inclusive of their end points. For instance, a range of 1 to 100 includes 1 and 100.

Terms of approximation, such as "about," "generally," "approximately," or "substantially," include values within a ten percent full scale error from a lowest value embodiment to a highest value embodiment. For instance, an embodiment including a range from approximately 10 to approximately 100 with a ten percent full scale error may include values from 1 to 109.

Benefits, other advantages, and solutions to problems are described below with regard to specific embodiments. However, the benefits, advantages, solutions to problems, and any feature(s) that may cause any benefit, advantage, or solution to occur or become more pronounced are not to be construed as a critical, required, or essential feature of any or all the claims.

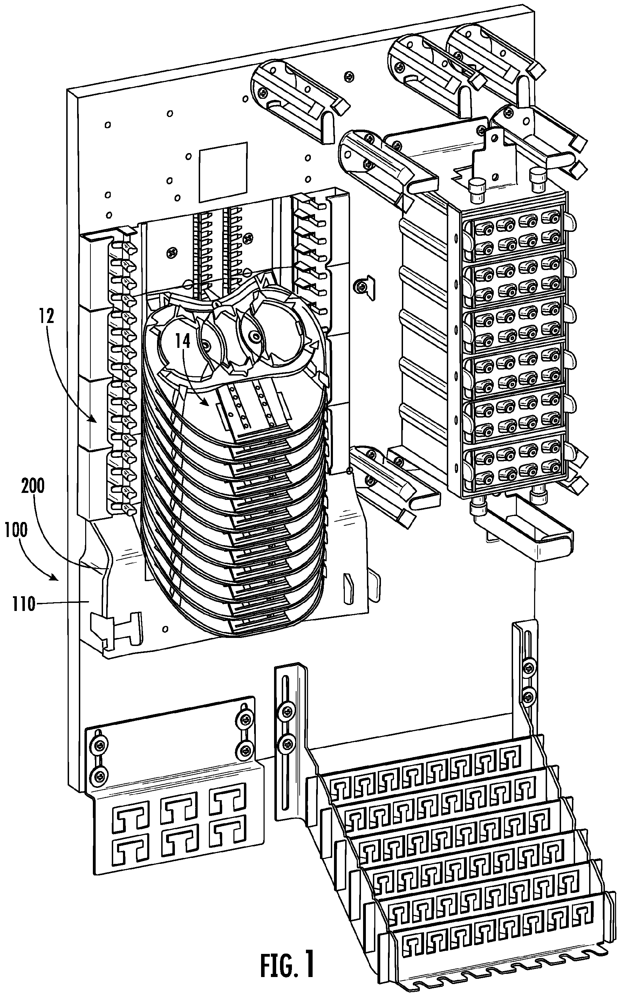

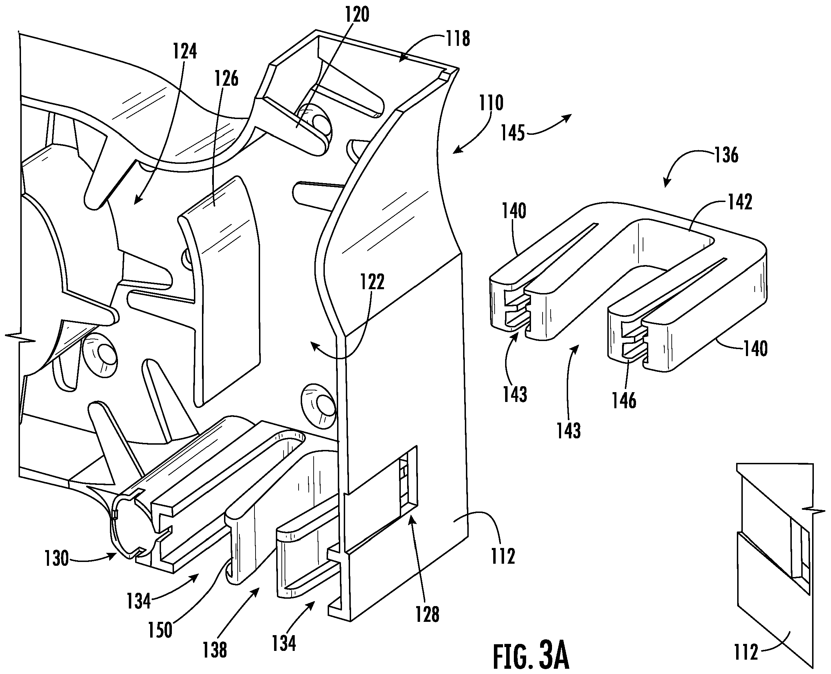

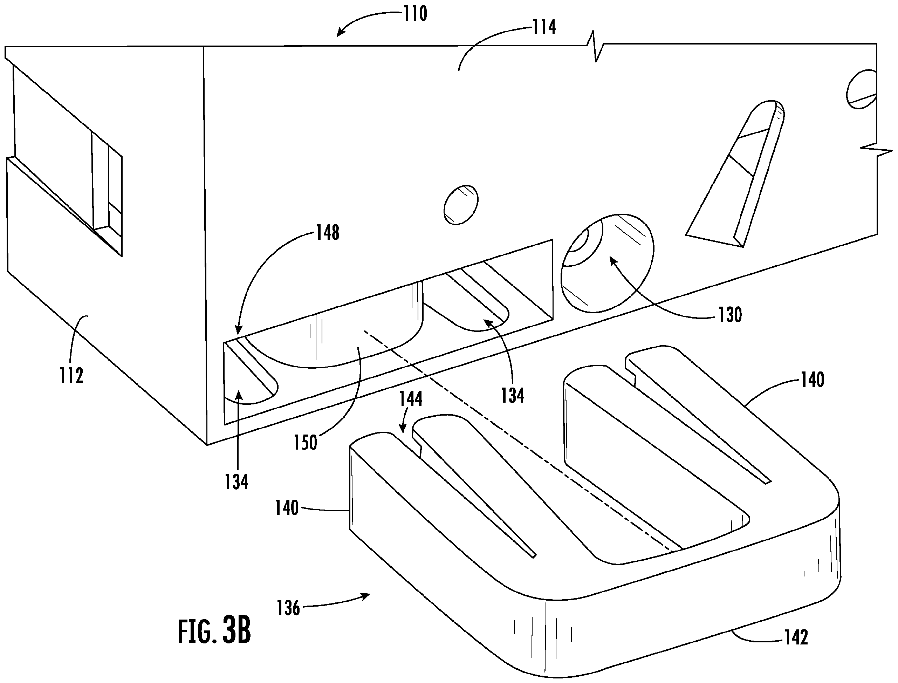

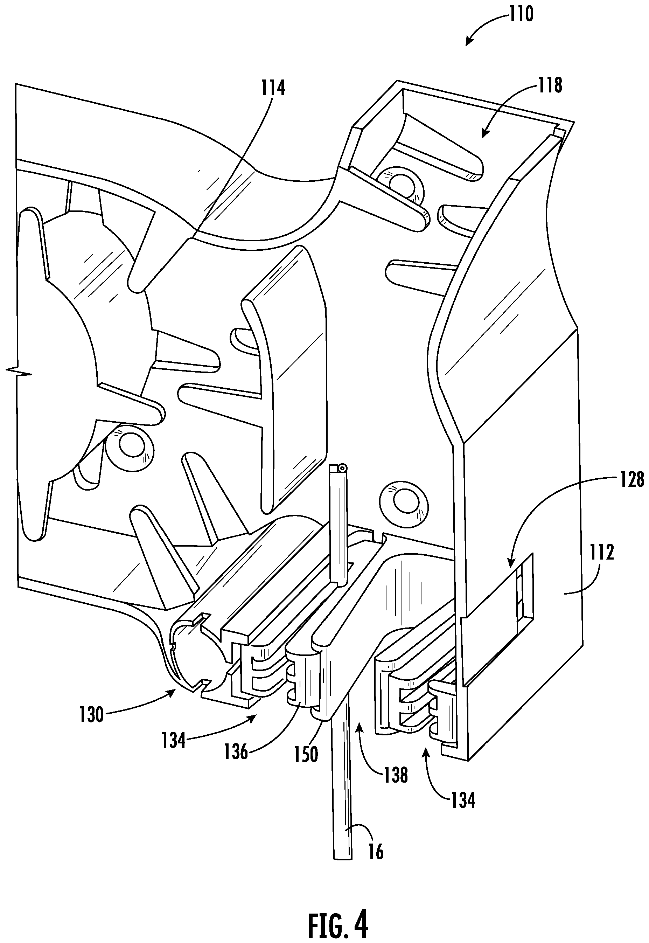

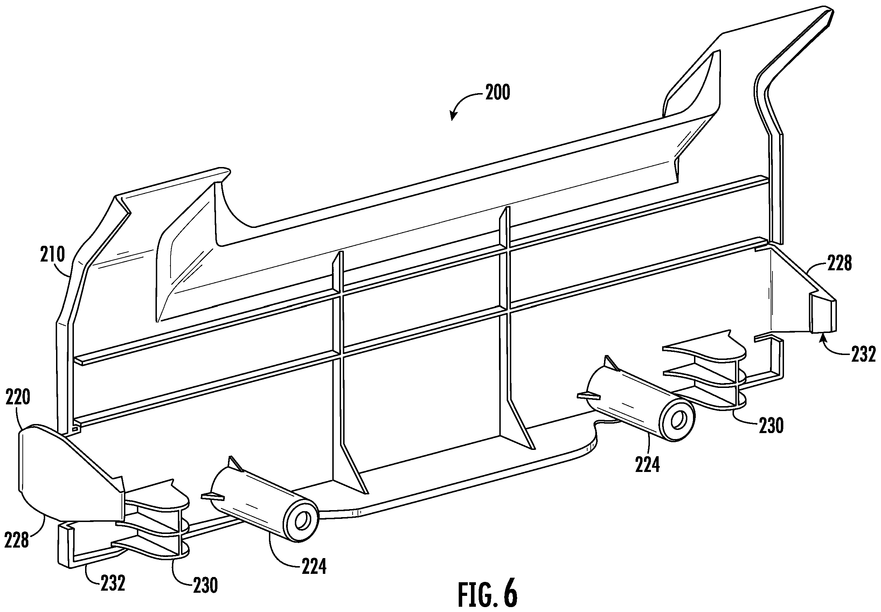

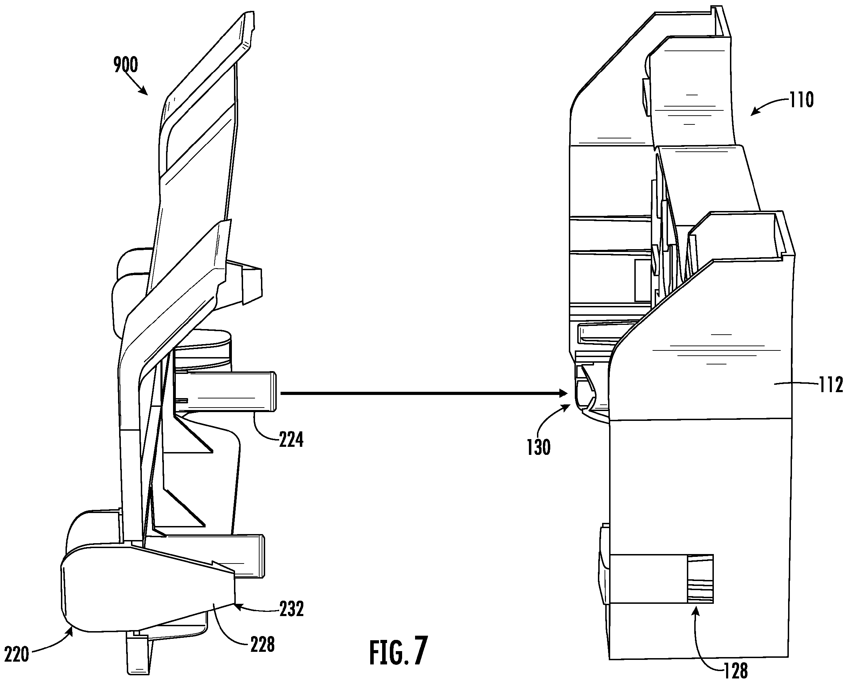

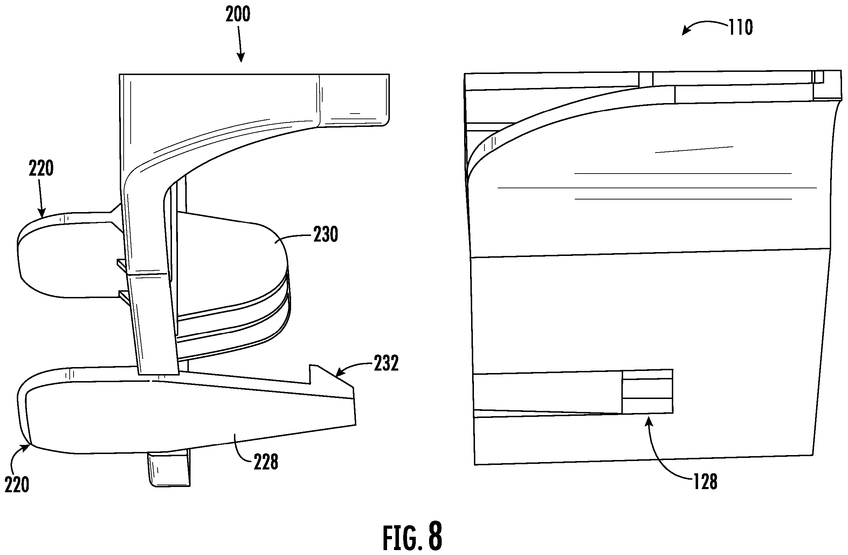

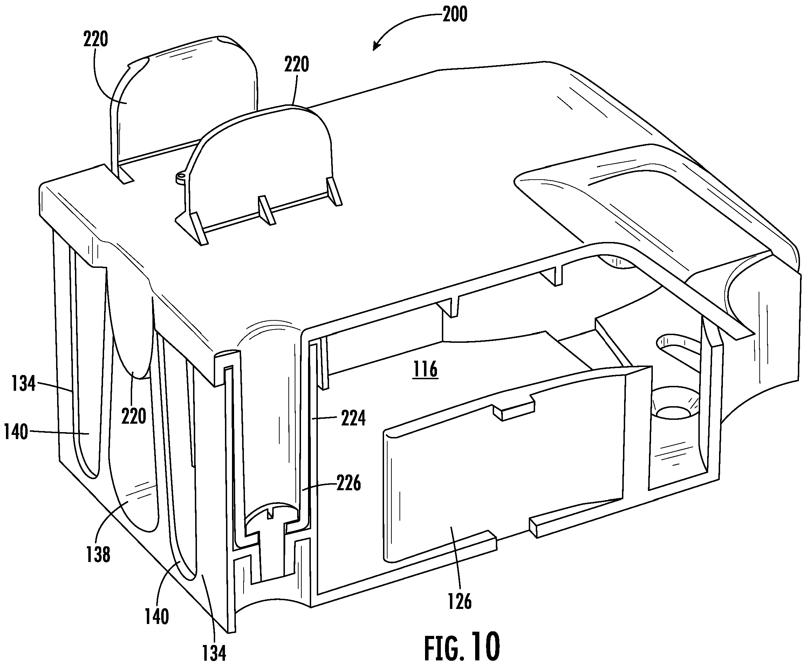

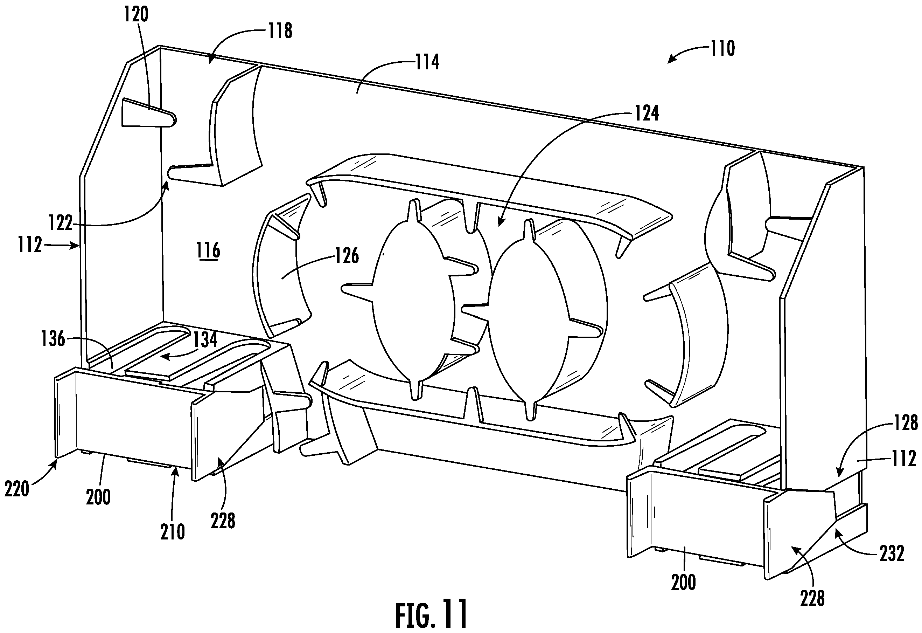

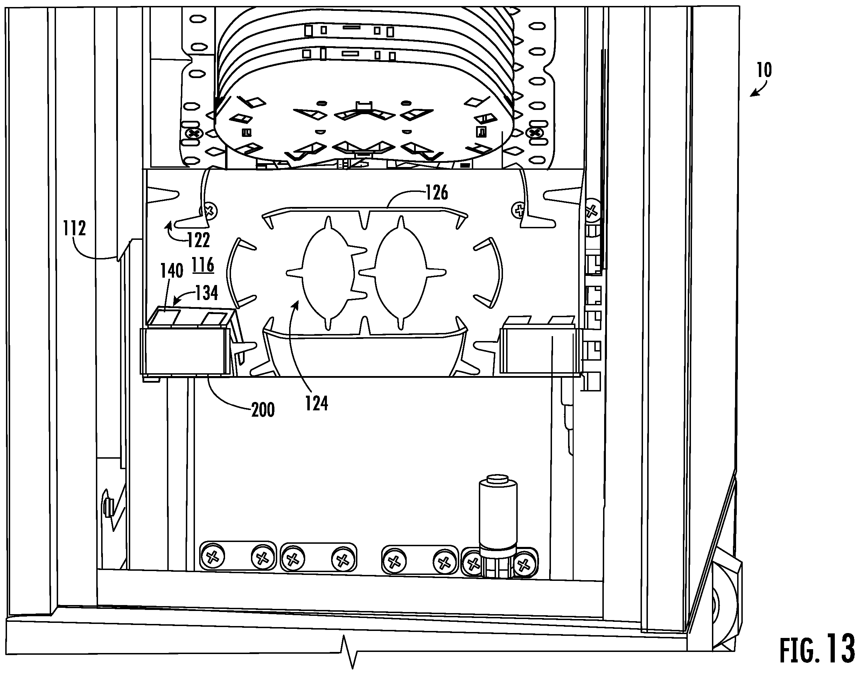

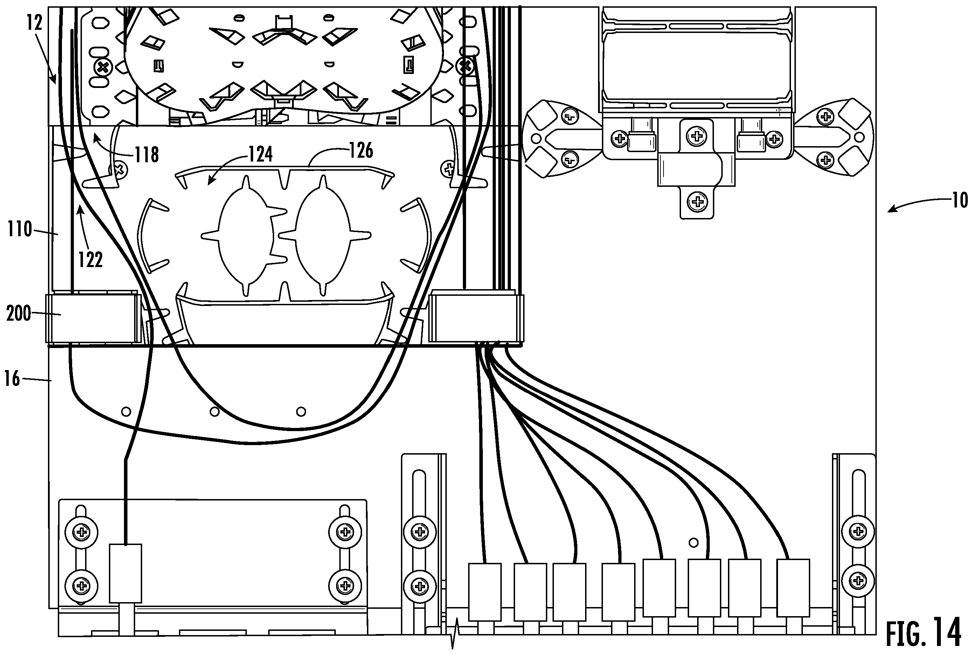

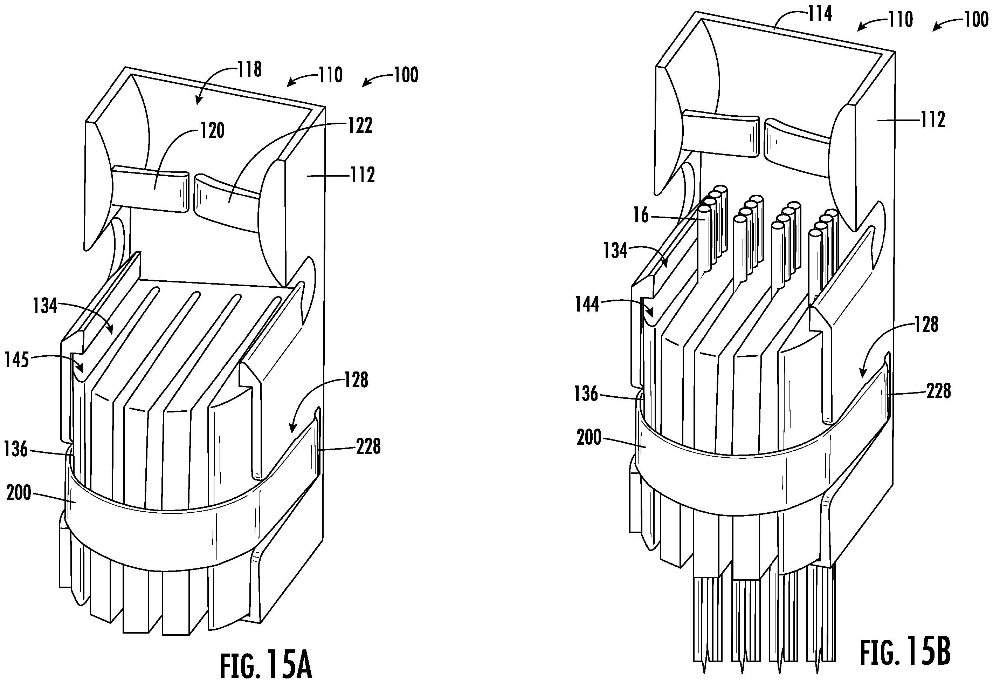

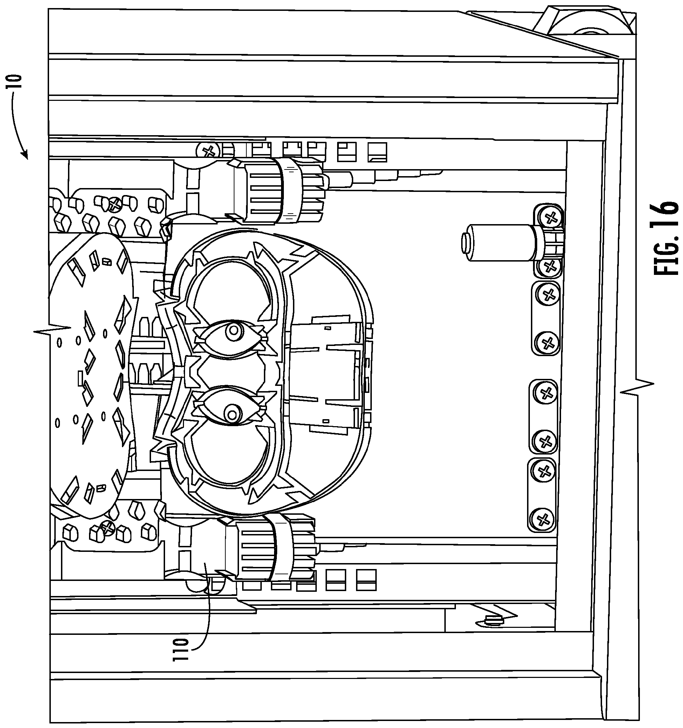

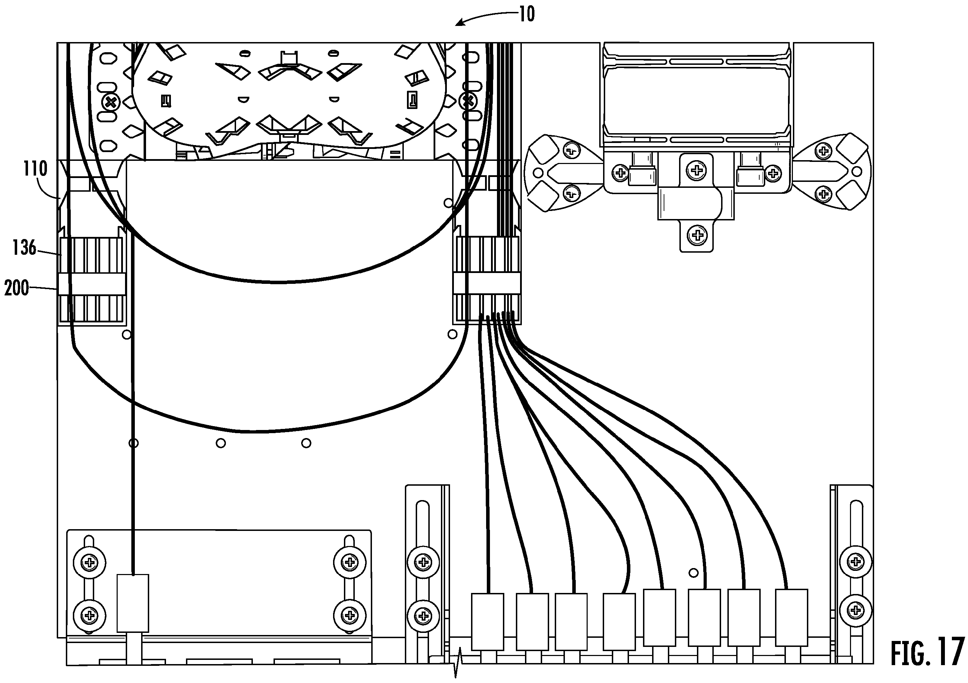

Referring now to the drawings, Figs. 1-17 depict embodiments of a cable manifold assembly 100, such as may be utilized for a telecommunications closure 10. Embodiments of the cable manifold assembly 100 may form a part of the closure 10, such as, e.g., a backboard optical fiber assembly depicted herein at Fig. 1, Figs. 13-14, and Figs. 16-17. Embodiments of the cable manifold assembly 100 may form a separate, or separable, structure from a telecommunications equipment structure. The manifold assembly 100 is configured to organize and protect optical fiber cables, provide bend management, slack storage, cable retention, cable passthrough, and slack management and retention, such as fiber raceways 12 including walls and interfaces forming to organize and protect fiber before routing into a telecommunications module 14, such as, but not limited to, a splice tray.

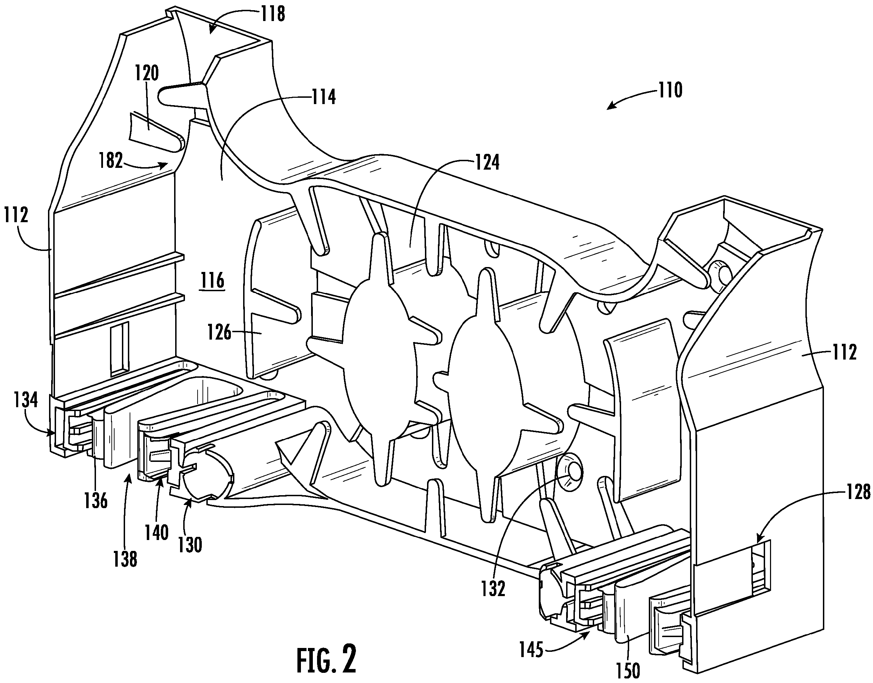

Referring to Figs. 2-4, the manifold assembly 100 includes a body 110. The body 110 may form a backplate attachable to a base of the closure 10. The body 110 includes a side wall 112. The body 110 may include a base wall 114 from which the side wall 112 may extend. The walls 112, 114 form an interior volume 116. The side walls 112 form an opening 118, such as extending to egress to the fiber raceways 12. One or more fiber management tabs 120 is positioned within the volume 116, such as, but not limited to, extending from side wall 112. A channel 122 is formed extending to the opening 118. A pair of side walls 112 may form the channel 122 extending toward the fiber raceway 12 (Fig. 1). The channel 122 may promote free movement of fiber/cable from the interior 116 to egress through opening 118.

The interior 116 may form a fiber/cable slack storage area 124. The storage area 124 may be positioned offset from the channel 122. The storage area 124 may include one or more interior walls 126 forming a pathway (e.g., a raceway, such as, but not limited to, elliptical, ovular, or circular pathways). Tabs 120 may extend from one or more interior walls 126, such as to provide fiber/cable management and slack storage at the storage area 124.

In various embodiments, the body 110 forms a cover latch receiver opening 128 configured to receive a latch 228 at a cover 200. The latch receiver opening 128 may be formed at the side wall 112 of the body 110. The body 110 may form a pair or more of openings 128, such as to receive and retain the cover 200 at the body 110.

In some embodiments, the body 110 forms a fastener opening 130 into which a fastener, post, or member is extendable to mate the cover 200 to the body 110. For instance, the body 110 may form the fastener opening 130 as a post into which a pin, shank, threaded fastener, or clip is mateable.

In still some embodiments, the body 110 forms a mount opening 132 into which a fastener, clip, or other retaining device is extendable, such as to mount the manifold assembly 100 to the closure 10.

The body 110 forms a retention arm pathway 134 at which a retention arm insert 136 is receivable to be retained at the body 110. The insert 136 may form a substantially U-shaped or horseshoe-shaped geometry including a pair of members 140 spaced apart from one another and extendable into respective pathways 134. Members 140 are spaced apart and structurally coupled together by a base 142, such as forming a gap 143 between the members 140. Member 140 forms a channel 144 at which a cable 16 is receivable. A groove 146 may be formed at the channel 144. For instance, the groove 146 may extend co-directionally to an extension of the channel 144 and member 140. The member 140 may generally extend co-directionally to an extension of the pathway 134 into which the member 140 is insertable.

A plurality of optical fiber cables 16 is insertable into the channel 144 at the member 140. For instance, cable 16 may extend substantially perpendicular to an extension of the channel 144 and pathway 134. The member 140 may form a deformable structure, such as formed of a compliant material (e.g., a natural or synthetic rubber). The cable 16 is at least partially retained as the compliant member 140 deforms or deflects. Grooves 146 formed at the member 140 at channel 144 may allow for a range of different cable diameters to be retained within the channel 144.

In various embodiments, the body 110 forms an insert opening 148 at the base wall 114 to allow members 140 of the insert 136 to extend into respective pathways 134. For instance, retention arm pathways 134 may extend from the insert opening 148 along a direction of extension of members 140 of the insert 136. Body 110 may further include deformable or displaceable walls 150 at least partially corresponding to the substantially U-shaped or horseshoe geometry of the insert 136 to form pathways 134 and a cavity, channel, or opening 138. The opening 138 is formed in an area corresponding substantially to the gap 143 between the members 140 at the insert 136 or the pathways 134 at the body 110. In various embodiments, inserts 136 are interchangeable, such as to allow for a plurality of diameters or cables to extend and retain thereat.

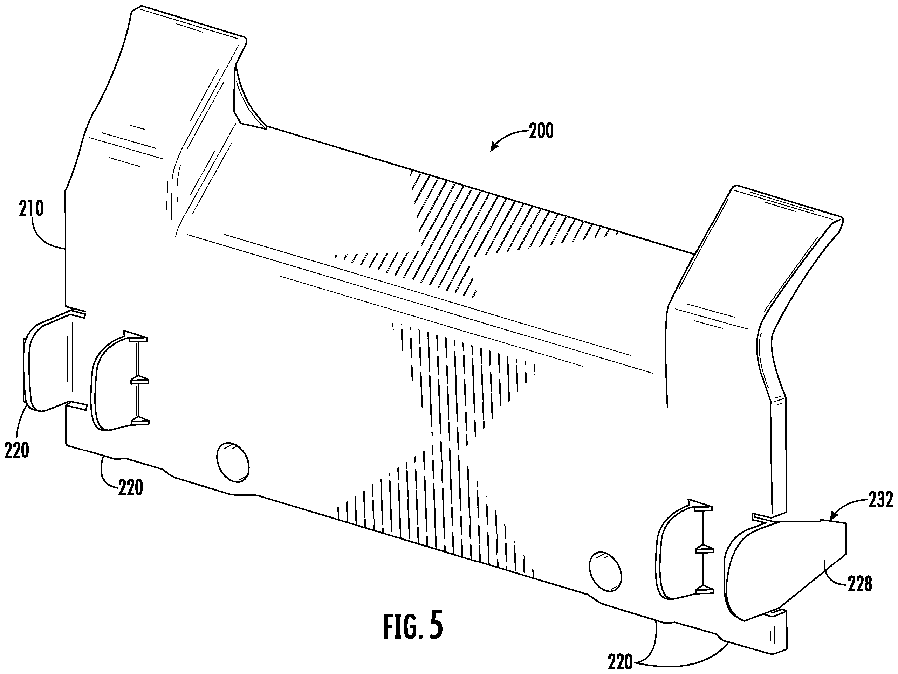

Referring to Figs. 5-9, in various embodiments, the manifold assembly 100 includes cover 200 releasably positionable onto the body 110. Cover 200 includes a ramp or protrusion 230 configured to extend into the opening 138. During an exemplary embodiment of operation, a user extends the protrusion 230 of the cover 200 into the opening 138. The protrusion 230 interacts with deformable arms or members 140 at the insert. Deformation of the members 140 may cause the channel 144 to close off. For instance, in various embodiments, channel 144, without protrusion 230 extending into opening 138, diverges outward at an open end 145 of the channel 144, such as distal to a closed end 147 of the channel 144 proximate to the base 142. In various embodiments, open end 145 is positioned distal to the insert opening 148, such as to form an open end of the pathway 134. In various embodiments, the manifold assembly 100 is configured to deform the arms or members 140 to generate compression to retain cable(s) 16. For instance, insertion of protrusion 230 may push walls 150 inward (e.g., along direction 152) to at least partially close the channel 144 and retain cable(s) 16.

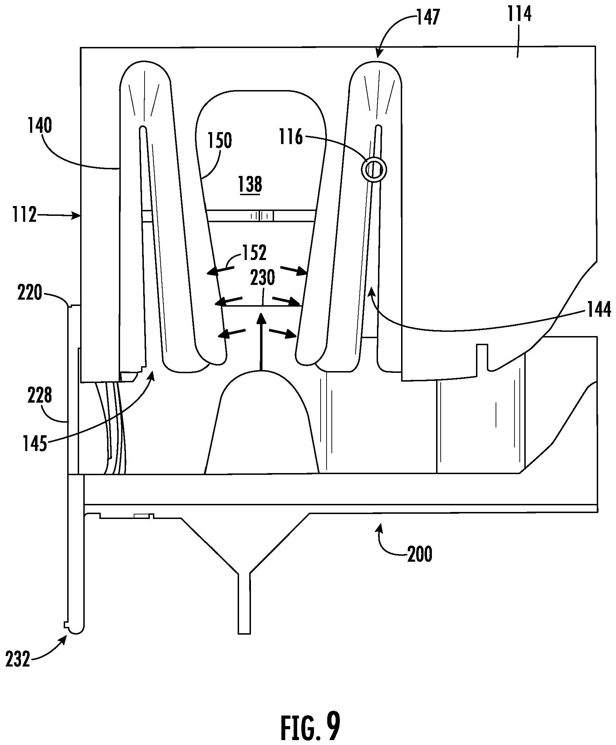

In some embodiments, such as depicted in Fig. 9, the protrusion 230 extends partially into opening 138, such as to allow opening 138 to remain such as to allow cables to pass through opening 138. The opening 138 allows for cables 16 to route into the interior 116 without retention.

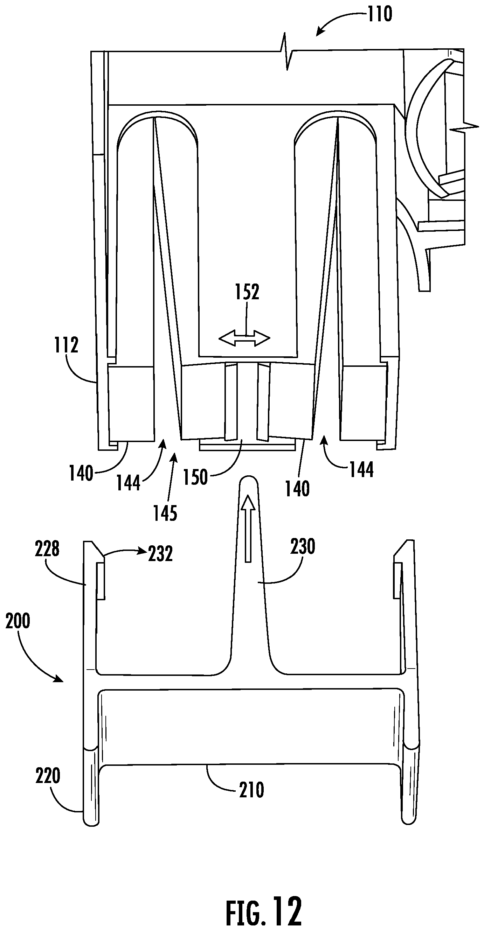

In still some embodiments, such as depicted in Fig. 12, protrusion 230 may fully extend into opening 138, such as to fully obscure opening 138 when protrusion 230 is positioned into opening 138.

Referring to Figs. 2-17, in various embodiments, cover 200 includes a cover wall 210 from which latches 228 extend. In some embodiments, the cover wall 210 extends substantially over the interior volume 116, such as to obscure the interior volume 116 and close the volume 116 between side walls 112 and base wall 114 of the body 110. In still some embodiments, cover wall 210 extends between latch receiver openings 128, such as to position a pair or more of latches 228 in corresponding position to the latch receiver openings 128. In still various embodiments, the protrusion 230 extends from cover wall 210. Cover wall 210 may extend over the open end 145, such as to obscure or cover the open end 145 at the channel 144 and pathway 134.

In some embodiments, cover 200 includes a user interface tab 220 at which a user may press (e.g., via fingers and/or thumb) to selectively remove the latch 228, such as a latch head 232, from the latch receiver opening 128.

In still some embodiments, such as depicted in Figs. 5-9, cover 200 includes a positioning member 224, such as a locating pins, insertable into fastener opening 130. A fastener opening may be formed at the positioning member 224 and corresponding to fastener opening 130, such as to allow a fastener 226 (e.g., screw, bolt, tie rod, or other threaded fastener) to extend thereinto to fasten the cover 200 to the body 110.

Embodiments of the body 110 forming a backplate and the cover 200 may interface via positioning member 224 forming a locator pins male interface insertable to a female opening at the body 110, such as to facilitate assembly of the cover 200 to the body 110 as the positioning member 224 guides or orients the cover 200 to the body 110 for latching at 128, 228. The positioning member 224 may further receive fastener 226, such as to further mechanically affix the cover 200 directly to the body 110.

Retention latches 228 extending from sides of the cover wall 210 mate with receiving openings 128 on the side walls 112 of the body 110 to affix the cover 200 and body 110 together. The user interface tab 220 may be positioned at the latch 228 distal to the latch head 232 insertable into the opening 128. The user interface tab 220 may form a thumb tab, such as may facilitate operation of the latch 228 and allow selective separation or detachment of the cover 200 and body 110.

Embodiments of the manifold assembly 100 depicted and described herein may provide an integrated apparatus and method (e.g., cover interaction with backplate) of retaining optical fiber cables, such as to remove a need for clips generally, or clips for cable retention. Such advantages may facilitate ease of use and reduced opportunity for error by the user.

Embodiments of the manifold assembly 100 including the deformable insert (e.g., rubber insert) integrated into an open channel may remove a need to modify (e.g., cut, tear off foam, etc.) a geometry or insert to accommodate various cables diameters. Such advantages may facilitate ease of use and reduced opportunity for error by the user.

Embodiments of the manifold assembly 100 depicted and described herein, such as including embodiments of the channel and insert, may improve and increase cable retention. Embodiments including an open pass through channel or opening may allow for cables to extend into the interior volume without requiring modifying foam where cable retention is not required, such as may save time for the user, reduce costs, and mitigate error.

Embodiments of the manifold assembly 100 may include plastic and rubber components, which may facilitate lower costs in contrast to metal components.

In some embodiments, the body 110, and various portions depicted and described herein, may form a unitary, monolithic structure. The structure may be formed of a plastic material, or other appropriate material.

Further aspects of the subject matter are provided in the following clauses:
1. A cable manifold assembly, the cable manifold assembly including a body including a side wall and a base wall, the side wall and base wall forming an interior volume, the base wall forming an insert opening, the body forming a pathway extending from the insert opening; an insert including a member extendable into the insert opening and pathway at the body, the insert forming a channel at the member, the channel diverging from a closed end proximate to the insert opening to an open end distal to the closed end, wherein the channel is configured to receive a cable at the channel from the open end; and a cover configured to selectively attach to the body to obscure the open end.
2. The cable manifold assembly of any one or more clauses herein, the insert including a pair of members separated from one another by a base, the pair of members extendable into respective pathways at the body.
3. The cable manifold assembly of any one or more clauses herein, wherein the body includes a displaceable wall extending between the respective pathways for the pair of members of the insert, the displaceable wall forming at least a portion of the pathway.
4. The cable manifold assembly of any one or more clauses herein, wherein the body forms a cavity between the respective pathways for the pair of members of the insert, and wherein the cover includes a protrusion extendable into the cavity, the protrusion configured to contact the displaceable wall at the cavity to displace the wall to narrow the pathway.
5. The cable manifold assembly of any one or more clauses herein, wherein the cover includes a cover wall configured to obscure the open end, and wherein a protrusion extends from the cover wall to contact the displaceable wall at the cavity to displace the wall to narrow the pathway.
6. The cable manifold assembly of any one or more clauses herein, wherein the protrusion partially extends into the cavity to form a cable pass through opening.
7. The cable manifold assembly of any one or more clauses herein, wherein the insert forms a U-shape including a pair of members extending from a base, and wherein the insert is extendable into the insert opening substantially perpendicular to an extension of a cable into the interior volume.
8. The cable manifold assembly of any one or more clauses herein, wherein the pathway extends from the insert opening substantially perpendicular to an extension of the cable into the interior volume.
9. The cable manifold assembly of any one or more clauses herein, wherein the side wall of the body forms a latch receiver opening configured to receive a latch of the cover.
10. The cable manifold assembly of any one or more clauses herein, wherein the side wall and a displaceable wall form at least one pathway, and wherein a latch receiver opening is formed at the side wall to receive a latch extending from a cover wall of the cover.
11. The cable manifold assembly of any one or more clauses herein, the body including a pair of displaceable walls extending from the insert opening, wherein the pair of displaceable walls converge toward one another from proximate to the closed end toward the open end.
12. The cable manifold assembly of any one or more clauses herein, wherein the pathway provides an opening into the interior volume of the body through which the cable is extendable, and wherein an extension of the cable is substantially perpendicular to an extension of the pathway from the insert opening.
13. A telecommunications closure, the closure including a fiber raceway configured to route to a telecommunications module; and a cable manifold assembly including a body including a side wall and a base wall, the side wall and base wall forming an interior volume, the side wall and a displaceable wall forming a pathway extending substantially perpendicular to a direction of extension of a cable into the interior volume, the pathway forming an opening into the interior volume; an insert including a member extendable into the pathway at the body, the insert forming a channel at the member, the channel diverging from a closed end to an open end distal to the closed end, wherein the channel is configured to receive the cable at the channel from the open end; and a cover configured to selectively attach to the body to obscure the open end.
14. The telecommunications closure of any one or more clauses herein, wherein the insert includes a pair of members extending from a base, and wherein the pair of members is extendable into respective pathways at the body.
15. The telecommunications closure of any one or more clauses herein, wherein the cover includes a cover wall configured to obscure the open end, and wherein a protrusion extends from the cover wall to contact the displaceable wall to selectively narrow the pathway.
16. The telecommunications closure of any one or more clauses herein, wherein the protrusion partially extends into a cavity formed between a pair of displaceable walls, and wherein partial extension of the protrusion forms a cable pass through opening between the pair of displaceable walls.
17. The telecommunications closure of any one or more clauses herein, wherein the side wall of the body forms a latch receiver opening configured to receive a latch of the cover.
18. The telecommunications closure of any one or more clauses herein, the base wall forming an insert opening, wherein the pathway extends from the insert opening substantially perpendicular to the direction of extension of the cable into the interior volume.
19. The telecommunications closure of any one or more clauses herein, wherein the displaceable wall diverges from the side wall from at the open end of the pathway.
20. The telecommunications closure of any one or more clauses herein, wherein the cover includes a cover wall configured to enclosure the interior volume of the body.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A cable manifold assembly (100), the cable manifold assembly (100) comprising:
a body (110) comprising a side wall (112) and a base wall (114), the side wall (110) and base wall (114) forming an interior volume (116), the base wall (114) forming an insert opening (148), the body (110) forming a pathway (134) extending from the insert opening (148);
an insert (136) comprising a member (140) extendable into the insert opening (148) and pathway (134) at the body (110), the insert (136) forming a channel (144) at the member (140), the channel (144) diverging from a closed end (147) proximate to the insert opening (148) to an open end (145) distal to the closed end (147), wherein the channel (144) is configured to receive a cable (16) at the channel (144) from the open end (145); and
a cover (200) configured to selectively attach to the body (110) to obscure the open end (145).

2. A cable manifold assembly (100) according to claim 1, the insert (136) comprising a pair of members (140) separated from one another by a base (142), the pair of members (140) extendable into respective pathways (134) at the body (110).

3. A cable manifold assembly (100) according to claim 2, wherein the body (110) comprises a displaceable wall (150) extending between the respective pathways (134) for the pair of members (140) of the insert (136), the displaceable wall (150) forming at least a portion of the pathway (134).

4. A cable manifold assembly (100) according to claim 3, wherein the body (110) forms a cavity, channel or opening (138) between the respective pathways (134) for the pair of members (140) of the insert (136), and wherein the cover (200) comprises a protrusion (230) extendable into the cavity, channel or opening (138), the protrusion (230) configured to contact the displaceable wall (150) at the cavity, channel or opening (138) to displace the displaceable wall (150) to narrow the pathway (134).

5. A cable manifold assembly (100) according to claim 4, wherein the cover (200) comprises a cover wall (210) configured to obscure the open end (145), and wherein the protrusion (230) extends from the cover wall (210).

6. A cable manifold assembly (100) according to claim 5, wherein the protrusion (230) partially extends into the cavity, channel or opening (138) to form a cable pass through the cavity, channel or opening (138).

7. A cable manifold assembly (100) according to any preceding claim, wherein the insert (136) forms a U-shape comprising a pair of members (140) extending from a base (142), and wherein the insert (136) is extendable into the insert opening (148) substantially perpendicular to an extension of a cable (16) into the interior volume (116).

8. A cable manifold assembly (100) according to any preceding claim, wherein the pathway (134) extends from the insert opening (148) substantially perpendicular to an extension of the cable (16) into the interior volume (116).

9. A cable manifold assembly (100) according to any preceding claim, wherein the side wall (112) of the body (110) forms a latch receiver opening configured to receive a latch (228) of the cover (200).

10. A cable manifold assembly (100) according to claim 1 or claim 2, wherein the side wall (112) and a displaceable wall (150) form at least one pathway (134), and wherein a latch receiver opening is formed at the side wall (112) to receive a latch (228) extending from a cover wall (210) of the cover (200).

11. A cable manifold assembly (100) according to claim 1 or claim 2, the body (110) comprising a pair of displaceable walls (150) extending from the insert opening (148), wherein the pair of displaceable walls (150) converge toward one another from proximate to the closed end (147) toward the open end (145).

12. A cable manifold assembly (100) according to any preceding claim, wherein the pathway (134) provides an opening into the interior volume (116) of the body (110) through which the cable (16) is extendable, and wherein an extension of the cable (16) is substantially perpendicular to an extension of the pathway (134) from the insert opening (148).

13. A cable manifold assembly (100) according to any of claims 3 to 5, 10 and 11, wherein the displaceable wall (150) diverges from the side wall (112) at the open end (145) of the pathway (135).

14. A telecommunications closure (10) comprising:
a fiber raceway (12) configured to route to a telecommunications module (14); and
a cable manifold assembly (100) according to any preceding claim.

15. A telecommunications closure (10) according to claim 14, wherein the cable manifold assembly (100) comprises a fiber management tab (12) extending from the side wall (112) within the interior volume (116), and wherein a channel (122) is formed extending to the opening (138), and wherein a pair of side walls (112) form the channel (122) extending toward the fiber raceway (12).
